# EUROPEAN PATENT SPECIFICATION

(11) **EP 2 114 540 B1**
(45) Date of publication and mention of the grant of the patent: **19.01.2011**
(21) Application number: 08730730.2
(22) Date of filing: 26.02.2008
(51) Int. Cl.: A63F 13/12

(54) **SYSTEM AND METHOD FOR INITIATING A GAMING SESSION USING EVENT-BASED EXCHANGE OF INFORMATION BETWEEN COMMUNICATION DEVICES**
SYSTEM UND VERFAHREN FÜR DEN BEGINN EINER SPIELSITZUNG MIT EREIGNISBASIERTEM INFORMATIONSAUSTAUSCH ZWISCHEN KOMMUNIKATIONSGERÄTEN
SYSTÈME ET PROCÉDÉ D'INITIATION D'UNE SESSION DE JEU UTILISANT UN ÉCHANGE D'INFORMATIONS BASÉ SUR DES ÉVÉNEMENTS ENTRE DES DISPOSITIFS DE COMMUNICATION

(30) Priority: 27.02.2007 US 679361
(43) Date of publication of application: 11.11.2009
(73) Proprietor: Sony Ericsson Mobile Communications AB, 221 88 Lund (SE)
(72) Inventor: BLOEBAUM, L. Scott, Cary, North Carolina 27519 (US); LIU, Charles, Chapel Hill, North Carolina 27514 (US)
(74) Representative: Banzer, Hans-Jörg
(86) International application number: PCT/US2008/054981
(87) International publication number: WO 2008/106432

(56) References cited:
- JP-A- 2005 267 361
- KR-A- 20040 040 546
- US-A1- 2005 234 830

## Description

### BACKGROUND

### Field of the Invention

The present disclosure relates generally to a system and method for event-based exchange of information in a communication system. More specifically, the invention relates to a system and method for initiating a gaming session using event-based exchange of information between communication devices.

### Description of the Related Art

Mobile communication systems and data packet networks (notably, the Internet) have both enjoyed significant success in recent years. Mobile communication systems deliver real-time voice communication between users in either analog or digital formats (or in a hybrid format). One well-known example of a mobile communication system is the Global System for Mobile Communication (GSM). This standard provides voice communication to its subscribers using circuit-switched communication technology. In this approach, the system allocates communication resources to a call for the entire duration of the call. On the other hand, the Internet primarily delivers digital information to users using data packet technology. In this approach, the system uses communication resources only during the periods in which data is being transmitted.

Efforts have long been underway to merge aspects of traditional mobile communication systems with data networks. The evolution of these efforts may be divided into a number of stages or "generations." For example, first generation (1G) technology generally pertains to analog "voice-centric" services. Second generation (2G) technology generally pertains to "voice-centric" digital communication services. Third generation (3G) technology generally pertains to high-speed broadband services with optional multimedia communication of voice, video, graphics, audio and other information. Further, 2.5-generation (2.5G) technology generally pertains to high-speed services having aspects of both 2G and 3G services. For instance, 2.5G technology may utilize General Packet Radio Service (GPRS) systems or Enhanced Data Rates for Global Evolution (EDGE) systems.

As a result of this evolving technology, communication by voice and data are becoming more and more integrated. For example, a mobile communication device (*e.g*., a mobile phone, smartphone, PDA, handheld computer, or other similar device), in addition to voice, may include various integrated functionalities, such as Short Message Service (SMS), Multimedia Message Service (MMS), GPRS location identification, etc.

Various new user services have been developed to take advantage of this simultaneous availability of multiple communications modes. In particular; several patents and patent application publications describe a so-called Phone Pages system, in which the generation and transfer of multimedia data objects is triggered by various communication-related events. These data objects, or Phone Pages, thus supplement a primary communication session, such as a voice call, an e-mail exchange, or an instant message conversation. The Phone Pages concept is described in the following patents and patent application publications: U.S. Patent No. 6,922,721, titled "Exchange of Information in a Communication System" and issued on July 26, 2005 to Minborg et al.; U.S. Patent Application Publication 2005/0271041 A1, titled "Exchange of Information in a Communication System" and filed on June 1, 2005 by Minborg et al.; U.S. Patent No. 6,996,072, titled "Method and Apparatus for Exchange of Information in a Communication Network" and issued on February 7, 2006 to Minborg; U.S. Patent No. 6,977,909, titled "System and Method for Exchange of Information in a Communication Network" and issued on December 20, 2005 to Minborg; and U.S. Patent Application Publication 2006/0114845, also titled "System and Method for Exchange of Information in a Communication network" and filed on November 14, 2005 by Minborg.

Further methods for initiating a multiplayer gaming session are known from JP 2005/267361 A and KR 2004/0040546 A, whereby gaming rights are used in the multiplayer gaming session, even though it is avoided that each of the players has to individually access the gaming server to obtain a gaming right.

More recently, the integration of communication technologies has become increasingly applicable to gaming environments as well. A video game is a game that typically involves user interaction with a controller interface to generate visual feedback on an electronic video screen. Although traditionally played on platforms such as personal computers or specialized video game consoles, video games are now being played across a full range of platforms and devices ranging from large computers (*e.g*., mainframes, servers, etc.) down to smaller hand-held devices (*e.g*., mobile phones, PDAs, smart phones, laptops, etc.).

One of the traditional benefits of video games is the ability to involve multiple users. Whether a game involves sports, adventure, racing, action, shooting, role-playing, puzzle, simulation, strategy, or a combination thereof, multiplayer functionality has typically stimulated healthy competition and increased social interactivity, which generally enhances the overall gaming experience.

Because many video game platforms now include communications capability, access to video games and interactivity between users are also adapting to this technology. Traditional access of video games involved physically purchasing a video game from a video game dealer, in which the video game is likely stored on a memory storage element, such as a cartridge, CD, DVD, or other similar memory element. While this remains the popular method of acquiring video games for console systems, communication-capable platforms and devices currently make it possible to purchase and download video games without physical going to a store. These communication-capable gaming platforms/devices may utilize a variety of broadband or mobile communications network technologies, such as infrared connection, Bluetooth, memory storage element, GPRS, 3G, WiFi, and other similar communication protocols, to perform the purchase and download functionalities.

Alternatively, if is also possible for a communication device to directly access and play video games without downloading. For example, a user may choose not to spend excessive time and energy downloading a game he or she is only going to play a handful of times. Instead, the user may elect to "rent" the game by only paying for the rights to play the game for a certain number of times from a video game dealer who hosts the video game at a remote server. As a result, the user may access and play the video game directly from the host system/server. This "rental" approach is advantageous for several reasons. First, the approach does not require storing the video game at the communications device. Second, a user saves on time and costs since renting a game to play a few times would be significantly more cost effective than purchasing a game that is hardly played. Third, since the video game server is not local, this approach may facilitate and promote a multiplayer gaming experience and improved interactivity by users.

However; despite the benefits of this "rental" approach, there remains a variety of problems with initiating interactive multiplayer games in this environment. For example, at least one problem exists in how to initiate a multiplayer video game for which rights to play or participate in that game are centrally-controlled and not originating from the initiating communications device itself. In other words, the necessary "rights" to play a game originate from the game source. However, if the party initiating the game session is not the source, distribution of these necessary rights to various participants may be rather cumbersome or altogether impracticable. Another problem that currently exists is a lack of user control in initiating a multiplayer game with players he or she desires to play with in either a single session or concurrently with another established session (multi-session). In other words, a user cannot initiate a multiplayer game while he or she is currently participating in another established session on the user's communication device.

In view of the foregoing, it would be desirable to provide a system and method for initiating a gaming session-using event-based exchange of information between communication devices to overcome the above-described inadequacies and shortcomings.

### SUMMARY OF THE DISCLOSURE

The present disclosure overcomes the above identified deficiencies of identifying and finding a data object and navigate between a set of data objects by applying a novel connection between a data-communications network and a telecommunications network by an event-based exchange of information between mobile communication devices to initiate a multiplayer video game.

According to the present invention, a method for initiating a multiplayer gaming session as defined in independent claims 1, 9 and 13 is provided. Furthermore, the invention also provides a device for initiating a multiplayer gaming session as defined in claims 8, 12 and 15. The dependent claims define preferred and advantageous embodiments of the present invention.

### BRIEF DESCRIPTION OF THE DRAWINGS

In order to facilitate a fuller understanding of the exemplary embodiments, reference is now made to the appended drawings. These drawings should not be construed as limiting, but are intended to be exemplary only.
Fig. 1 depicts an exemplary illustration of a communication infrastructure overview according to one embodiment of the disclosure.
Fig. 2 depicts an exemplary flowchart diagram of a subscriber interaction in an A-Party UE, according to an embodiment of the disclosure.
Fig. 3 depicts an exemplary flowchart diagram of a subscriber interaction in a data server, according to an embodiment of the disclosure.
Fig. 4 depicts an exemplary illustration of a simplified communication infrastructure overview, according to an embodiment of the disclosure.
Fig. 5 depicts an exemplary flowchart diagram for initiating a multiplayer game, according to an embodiment of the disclosure.
Fig. 6 depicts an exemplary flowchart diagram for initiating a multiplayer game, according to an embodiment of the disclosure.
Fig. 7 depicts an exemplary flowchart diagram for initiating a multiplayer game, according to an embodiment of the disclosure.
Fig. 8 depicts an exemplary flowchart diagram for initiating a multiplayer game, according to an embodiment of the disclosure.

### DETAILED DESCRIPTION OF EMBODIMENTS

The present disclosure will now be described with references to a telecommunications system based on GSM as a circuit switched communication system and GPRS as a packet switched communications system. It should, however, be noted that the embodiments described are to be considered exemplary and that other packet and circuit switched systems may equally be considered, both fixed- as well as mobile- and with any access technology, *e.g*., Time Division Multiple Access (TDMA), Code Division Multiple Access (CDMA), Frequency Division Multiple Access (FDMA), Orthogonal Frequency Division Multiple Access (OFDMA), Time Division Duplex (TDD), Frequency Division Duplex (FDD) or any combinations thereof. In addition, wired communication systems (*e.g*., xDSL), mixed wired/wireless systems (*e.g*., WLAN+xDSL), or other various communication systems may also be provided. The disclosure is not restricted to any specific type of communications network or access technology.

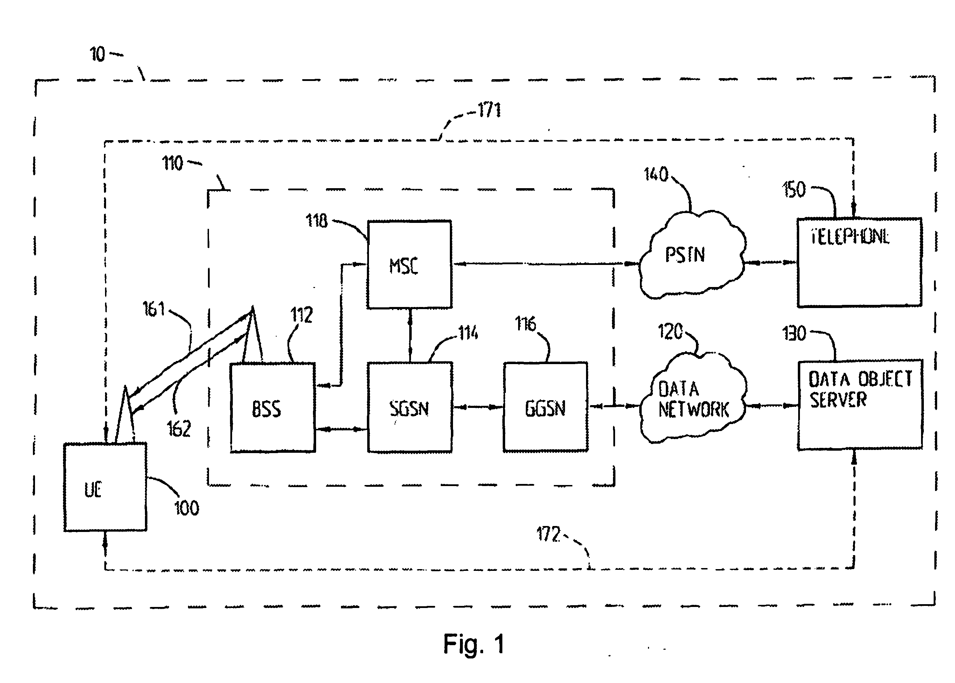

Fig. 1 illustrates a communication infrastructure overview 10 where a number of different communication networks may be interconnected. Fig. 1 may include both nodes in a Circuit Switched (CS) mobile communication network, *e.g.*, a Mobile Switching Center (MSC) 118, and Base Station Subsystem (BSS) 112, as well as nodes included in a Packet Switched (PS) mobile communication network, *e.g*., Serving GPRS Support Node (SGSN) 114 and a Gateway GPRS Support Node (GGSN) 116. Typically, the SGSN may include functionality such as re-segmenting data packets according to one protocol into data packets according to protocols used over the air interface. The SGSN may also include control mechanisms for one or several BSS 112 as well as Quality of Service (OS) mechanisms. The GGSN may include functionality required to maintain communication between a mobile packet data network and other packet data networks *e.g.*, data network 120. The CS part of the network may connect to a PSTN network 140, and the PS part of the network may connect to a data network 120. The data network 120 may be an external or internal network, *i.e*., with global or limited access possibilities. As shown, the PS and CS parts of the network may also be interconnected by way of an interface between the MSC 118 and the SGSN 114. The BSS 112 may serve both the PS as well as the CS part of the network with packet switched 161 as well as circuit switched 162 communication resources over the air, to provide mobility to both PS and CS service users and their User Equipment (UE) 100.

UE 100 may be a wireless phone, a Personal Digital Assistant (PDA), a smart phone, a computer (*e.g*., a laptop notebook), a gaming device, a combination thereof (*e.g*., a mobile phone connected to a laptop computer), or other similar device. Other various embodiments may also be considered.

The PSTN 140 may provide users (*e.g*., at UE 100) connected to the fixed network with service, *e.g*., to "plain old telephones" (POTs), facsimile or data modem devices 150. Other examples of devices connected directly or indirectly to the PSTN 140 may include ISDN terminals and communication devices connected via a Digital Subscriber line (DSL) (*e.g*., ADSL, HDSL and XDSL) and/or mixed wired/wireless combinations (*e.g*., WLAN+xDSL).

The data network 120 may include one or several routers (not illustrated) and data bridges such that several nodes may be interconnected and communicate with each other. The data network 120 used in connection to the present disclosure may also include a data object server 130. In one embodiment, the data object server 130 may include a plurality of data object servers in a data network 120.

Examples of data networks may include the Internet and Intranet networks. A user at the UE 100 may obtain a complete logical connection 171 to an indicated B-party telephone 150, connected to the PSTN 140, through the CS communication channel 161 provided between the UE 100 and the BSS 112, and further via the MSC node 118 over which a conversation may be conducted between party UE 100 and telephone 150. Similarly, UE 100 may obtain a complete logical connection 172 to equipment, *e.g*., data object server 130, connected to the data network 120 through the PS communication channel 162 provided between the UE 100 and the BSS 112, and further via the SGSN 114 and GGSN 116 node, over which data may be sent between party UE 100 and data object server 130. In one embodiment, the communications network 110 may also include all IP elements, *i.e*., UE 100 has real-time voice communication with a packet data device.

According to one aspect of the present disclosure, a technique for connecting a dialed B-party number to a data object is described. A data object, for example, may be graphical, text, sound, voice, animations, static or dynamic pictures, or any combination thereof. The connecting of a B-party number to a specific data object, hereafter referred to as a "phonepage," may allow an A-party direct access to information that a B-party wishes to display to a calling party. The phonepage may reside in a memory in a telecommunications network, or in a memory in a data-communications network connected thereto. The phonepage may have a similar appearance to an Internet web page, but may also take other appearances. The displaying of the phonepage may be made dependent upon the capabilities of the A-party user equipment.

Depending on the type of equipment used by the A-party, the node storing the phonepages may, upon detection of type of equipment, select the most advantageous way of displaying a selected data object.

Also, depending on the A-party user equipment, the phonepage may provide different levels of interaction possibilities, *i.e*., only display information, or be a fully interactive data object with a duplex communication between the A-party and the node housing the memory in which the phonepage is stored.

Phonepages may be configured to be displayed automatically or by indication from the A-party. In one embodiment, a B-party may have the same capabilities of obtaining phonepages upon reception of an A-number in conjunction with an incoming call.

According to another aspect of the disclosure, a data object server 130 may include data objects, *e.g*., phonepages, associated to a telephone number. The telephone number may be identical to a subscriber number, *e.g*., an A- or B-number, addressing an originating user equipment or a terminating user equipment, respectively. The A-party, upon dialing a B-number, may connect to a data object server 130 by way of PS communication channel and receives a data object, *e.g*., a phonepage, stored in a memory position in the data object server, with a memory address corresponding to the B-number dialed. The phonepage may consist of information about the B-party, or it may simply provide an immediate access to an internal or external data network as maintained by the B-party subscriber. Alternatively, the B-party phonepage may consist of information regarding a B-party user, *e.g*., phone number, address and/or other information. After receiving the B-party phonepage, one or several procedures may follow. If the B-number addresses a POT 150, a circuit switched voice connection may be setup. If the B-number is addressing another device, such as a mobile communications device similar to that of UE 100, other events may occur. This may also depend on the type of A-party device (UE 100) that is used.

In one embodiment of the present disclosure, UE 100 does not support the use of a PS communication channel whereby data objects can be retrieved by other means, such as a Short Message Service (SMS) or a temporary CS communication channel. In a variant of the present invention, a PS communication channel, for example, having a particular QoS, may be used for conveying speech within the communication system 10 whereby the PSTN 140 and the data network 120 is interconnected by some means (not shown in FIG. 1).

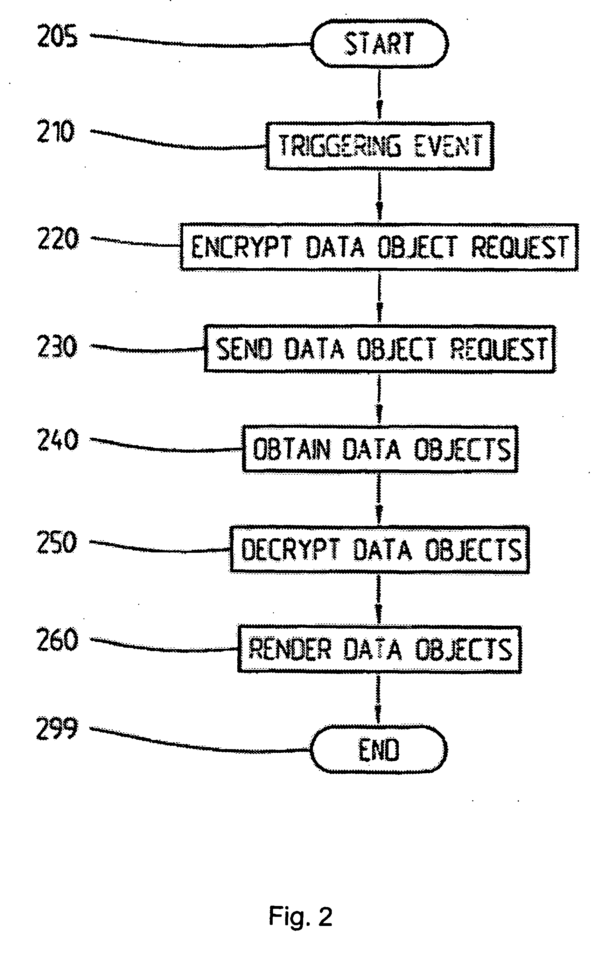

Fig. 2 depicts an exemplary illustration of a flow diagram of a procedure in a UE (like the UE 100) for communicating a phonepage to an A-party using the UE, according to one embodiment of the present invention. In step 205, the procedure may start by an initiation from the A-party, (*e.g*., a UE is switched on). In step 210, a trigger of a phonepage request may be indicated, either automatically (*e.g*., a call is terminated by the other party) or manually by the A-party (*e.g*., the dialing of a B-number). The triggering event 210 may be at least one of a number of events, *e.g*.,:
- An outgoing call is or is about to be initiated.
- An addressed B-party answers a call.
- An addressed B-party is busy.
- An addressed B-party does not answer.
- An addressed B-party rejects a call.
- An addressed B-party is unavailable (*e.g*., an addressed mobile phone is out of coverage).
- An incoming call is imminent or has just started.
- A conference call is or is about to be initiated.
- A call is disconnected.
- A call is conducted (under which several triggering events can be generated).
- A subscriber is put on hold.
- A new cell in the Public Land Mobile Network (PLMN) has been selected.
- The location of a subscriber has changed.
- A new PLMN operator is selected.
- A new country of registration is made.
- A UE is about to be switched off.
- A UE has been switched on.
- When a designated button on a UE is pressed.
- In response to a talk spurt received by a UE.
- A voice mail has been left to a subscriber.
- A SMS has been sent to a subscriber.

According to one aspect of the present disclosure a data object server 130 may include data objects, *e.g*., phonepages, associated to an address indication such as a telephone number, or an Internet address such as an IPv6 address. The telephone number may be identical to a subscriber number, *e.g.*, an A- or B-number, addressing originating user equipment or a terminating user equipment, respectively. The A-party, upon dialing a B-number, may connect to a data object server 130 by way of PS communication channel and receives a data object, *e.g*., a phonepage, stored in a memory position in the data object server, with a memory address corresponding to the B-number dialed. The data object server may comprise the phonepage with information about the B-party directly, or it may simply provide an immediate access to a location in an internal or external data network as maintained by the B-party subscriber, *e.g*., the object server 130 may first function as a number server providing a translation of the provided B-number to a corresponding URI where the phonepage resides, which may be at a physically separate phonepage object server. The translation-and provision of the actual requested phonepage may be either transparent, *e.g*., the phonepage number server forwards; or dispatches, the phonepage request to an appropriate phonepage object server, which phonepage object server communicates directly, or indirectly via the name server, to the requester, or the phonepage number server returns the URI of the requested phonepage to the requester after which the requester will be redirected by using the URI to request the desired phonepage.

The B-party phonepage may comprise information regarding a B-party user, *e.g*., phone number, address and/or other information. The B-party phonepage may also comprise information regarding the addressed B-party's user equipment. After having received the B-party phonepage, one or several procedures may follow. If the B-number is addressing a POT, 150, a circuit switched voice connection may be setup. If the B-number is addressing another device, such as a mobile communications device similar to that of UE 100, other events, such as when a pay service is used, may occur. Again, may depend on the type of A-party device (UE 100) that is used.

The A-party may initiate a request in step 230, possibly after encryption in step 220, and sends this request via a communication channel, (*e.g*., packet switched as illustrated in Fig. 1) to a data object server. The data object request may include at least one of a number of different parameters, *e.g*.:
- A requested protocol to be used for transmission (*e.g.*, WAP, WML, HDML, HTML).
- An identification of a data object server (*e.g*., a server name or a plain IP address).
- A code denoting what kind of event triggered the data object request (*e.g*., outgoing call setup).
- The indicated B-number associated to at least one B-party equipment.
- An A-party identity, *e.g*., an A-number of a mobile station.
- A network address of the A-party (*e.g.*, IP address) used by the data object server when returning a requested data object.
- A capability code indicating the displaying capabilities of the A-party (*e.g*., screen resolution, audio, etc.).
- A code indicating an encryption scheme or encryption key used.
- A code indicating in what country the mobile station is registered (country code).
- A code identifying the current PLMN (V-PLMN) operator or the PLMN where the A-party has a subscription (H-PLMN) or both.
- A code indicating the vendor of the mobile station and the type of the mobile station.
- A code indicating an equipment unique identity.
- A validation code (*e.g.*, a checksum) of the parameters.

The data object request in 230 may, according to one embodiment of the disclosure, be answered by the data object server in an encrypted format, in which case a decryption in step 250 follows the reception of the response in the user equipment.

The next step 260 may include a rendering procedure, where the data objects are displayed according to the capability of the UE after which the procedure is ended in step 299. After step 299, there may include one or several procedures according to the capability of the A-party UE or the type of equipment addressed by a B-number. For example, a call may be setup or a call may be disconnected. According to one of the above-mentioned embodiments, where a continuous triggering event is that a call is conducted, special advantages may be relevant (*e.g*., commercial information may be sold in response to a dialed B-number allowing easy payment for such information).

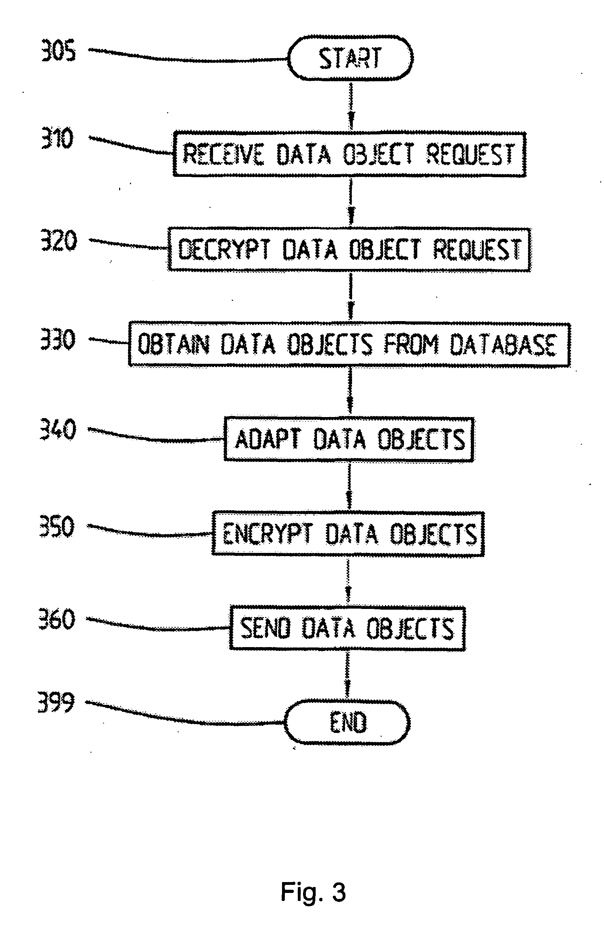

Fig. 3 depicts an exemplary illustration for corresponding procedures in a data object server (*e.g*., the data object server 130), in which the procedure may start in step 305, and in step 310, the data object server may receive a .request for a data object. The request may typically include at least an indication corresponding to an A- or B-number and what kind of action triggered the request. If the request is encrypted, decryption may be made before interpreting the content, as depicted in step 320. The address indication (*e.g*., A- or B- number) in the request received in step 310 may be mapped with a memory address in the data object server, or to an address in the data object server, connected memory, and the data object, *e.g.*, phonepage, may be retrieved in step 330. The request in step 310 may also include an indication of a UE display capability, where the data object may be adapted in the data object server to a specific rendering capability, step 340, of a receiving UE. If the request was encrypted, or if requested for some other reason, the data object may be encrypted in step 350 before it is returned to the requesting UE, in step 360 and then the procedure may end in the data object server, as depicted in step 399.

The above described general solution to obtain a data object connected to an address indication may be varied in a number of different ways, depending on, *e.g*., the capabilities of communication of the UEs involved. For example, a method of simultaneously requesting, encrypting, obtaining, decrypting, and rendering a sequence of data objects may also be applied in a variant of the present invention.

User equipment, like mobile stations, may be developed to handle both packet switched and circuit switched communication simultaneously. These may be generally referred to as class A mobile stations. Other mobile station designs may allow packet switched and circuit switched communication alternatively, *e.g*., no simultaneous PS and CS transmission and reception. These may generally be referred to as class B mobile stations.

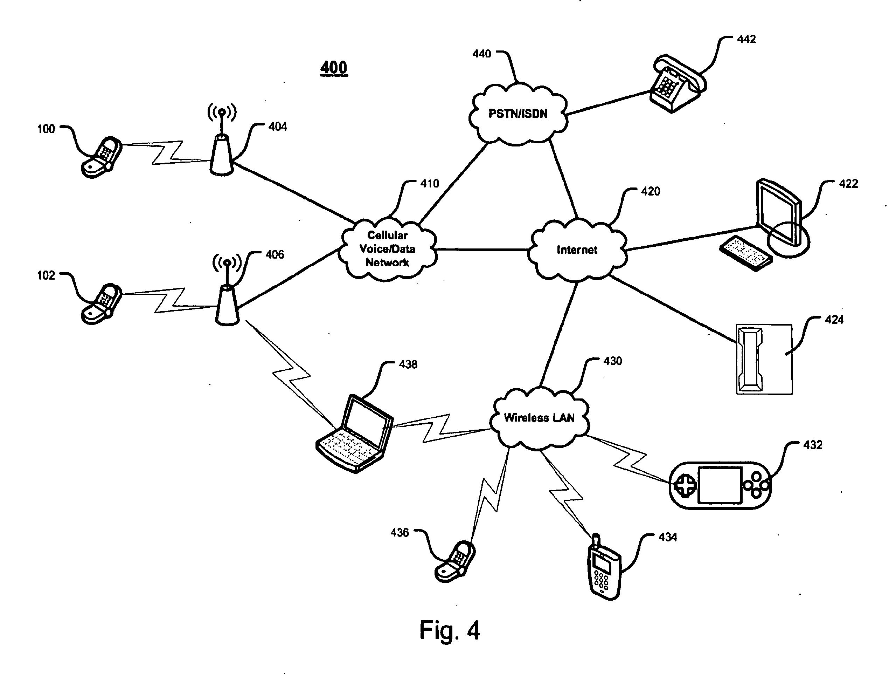

Fig. 4 depicts a communication infrastructure overview, according to an embodiment of the disclosure. Although Fig. 4 is a variation of Fig. 1, it should be understood in relation to Fig. 1 in that the placement and relationship between elements as described in relation to Fig. 1 may similarly apply to Fig. 4 as well.

As depicted in Fig. 4, UE 100 may be connected to a communications network, such as a cellular voice/data network 410. Additionally, the communications network 410 may also be connected to a fixed-line phone 442 via a PSTN/ISDN 440 and to a variety of other communication devices (*e.g*., desktop computers 422, IP phones/switchboards 424, etc.) supported by VoIP/PSTN via the Internet 420. Internet 420 may further connect to a variety of mobile communication devices via a wireless LAN 430. These mobile communication devices (or UEs) may include game controllers 432, PDA/smartphones 434, mobile phones 436, laptop computers 438, etc. In addition, any one of these communication devices, *e.g*., the laptop 438, may also simultaneously be connected to base transceiver stations 404, 406, from which all signals are sent and received in the communication system 400 since the base transceiver stations 404, 406 may hold radio transceivers that define a cell and coordinate radio-link protocols with a communications device. It should be appreciated and understood that each of the mobile communication devices (or UEs) of communication system 400 is not limited to the examples set forth above. Other various examples and embodiments may also be considered.

In one embodiment of the present disclosure, data object server 130 may be hosted and operated to provide multiplayer video games. These multiplayer video games may be offered on a commercial basis or may be redeemable by rebate, coupon, or promotion, or as a bundled package. Other variations may also be provided. It should also be appreciated by one of ordinary skill in the art that although one data object server 130 is depicted (see Fig. 1), a plurality of data objects may be provided and/or utilized. Furthermore, one or more game servers (not shown) and data storage elements, *e.g.*, databases (also not shown), may also be connected to the data object server 130. These additional components and elements may optimize gaming functionality, such as improved graphics, movement, and complexity in multiplayer gaming interactivity.

In one illustrative example, a user (*e.g*., User A) may desire to play a video game on his or her UE 100. Rather than playing alone, User A may find it more enjoyable to play with friends, User B and User C, both of which may be connected to the communication network 400 at any of the communication device (or UE) locations of Fig. 4. In one embodiment, User A may initiate a multiplayer gaming session with User B and User C by establishing an initial gaming session. This may be considered a single session gaming initiation. In another embodiment, User A may initiate a gaming session with User B and User C after having already established a first session with User B and User C. The first session may be, for example, a voice call, in which User A, User B, and User C are talking with each other via a first communication channel. In this instance, User A may initiate a game by establishing a second session via a second communication channel with the intent to initiate a multiplayer gaming session with User B and User C. This may be considered a multi-session initiation. One benefit of a multi-session gaming initiation may be to ensure that User A effectively establishes a multiplayer video game by first communicating with his or herfriends, in this case, User B and User C. Without a multi-session option, User A may initiate a gaming session without knowing the availability of User B or User C, which may lead an unestablished multiplayer gaming session and/or wasted time. Other various embodiments may also be provided.

It should be appreciated that the UEs of User B and User C are not required to be identical devices. In fact, User A, User B, and User C may each use a different type of communication device. As a result, the various communications devices may be supported by a common gaming platform (*e.g*., Java or some native application programming interface (API)) or multiplayer game itself may be available for each of the various gaming platforms supported by the various communications devices. Other variations may also be considered.

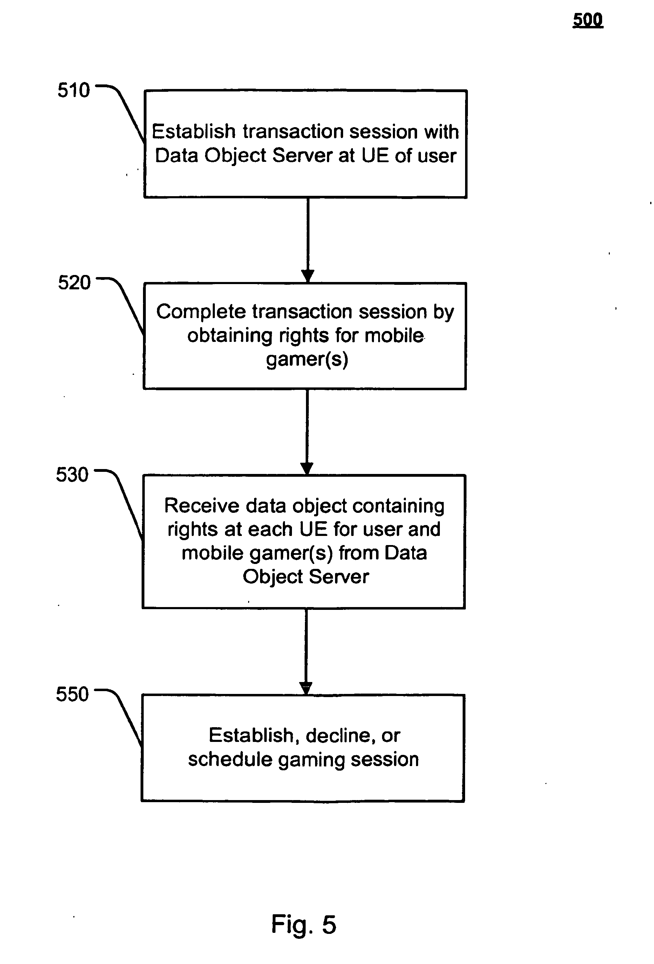

Fig. 5 depicts an exemplary flowchart diagram for initiating a multiplayer game, according to an embodiment of the disclosure. In step 510, a user operating UE 100 may establish a transaction session with a game source to play a video game with other participants. In step 520, the transaction session may be complete when rights for all the predetermined number of participants or invitees are obtained. In step 530, the user and each predetermined invitee may receive a data object containing rights to play the multiplayer game at their respective UE from the data object server 130. In step 550, the gaming session may be established, declined, or scheduled for playing at a later time.

Referring to the previous example, in step 510, User A may establish a transaction session with the game source. User A may pay a certain price to the game source to play Game X with User B and User C. In this exchange or transaction, the game source may provide the rights to play Game X for three participants - User A, User B, and User C, as depicted in step 520.

In step 530, the gaming participants (*e.g*., User A, User B, and User) may each receive directly from the data object server 130 at their respective UEs, a data object containing at least an invitation to participate in Game X, the necessary rights, the identity of the organizer (User A in this case), and the identities of the other invitees. In another embodiment, the necessary rights may not be included in the data object itself. Rather, the data object may contain a reference to the game server. As a result, these rights, which may be stored in a remote location, may be obtained indirectly via an alternative access process (*e.g*., hyperlink or other similar indicator) included in the data object.

In step 550, the invitees, *e.g*., User B and User C, may accept, decline, or postpone the offer to participate in the gaming session initiated by User A. If the offer to participate in the gaming session is accepted by the invitees, the gaming session may be established directly between User A and the invitees that accepted or as a plurality of sessions through a central gaming server. In some cases, the users may already have the particular game client on their device but only need the rights to use it in this instance. In other cases, the participants may need to download the client which may come with the rights. This may be analogous to downloading a movie, storing it on a personal video recorder (PVR), and having to "rent" it each time you watch.

If the offer to participate in the gaming session is declined by any of the invitees, he or she will not enter the gaming session. Communication may also be terminated immediately. If the offer to participate in the gaming session is postponed, the participants may schedule a future time to play the game. In one embodiment, the data object may contain sufficient information (*e.g*., session initiation link to a gaming server, etc.) for the participants to start the gaming session or initiate scheduling of a gaming session at a later time. Other various embodiments may also be provided.

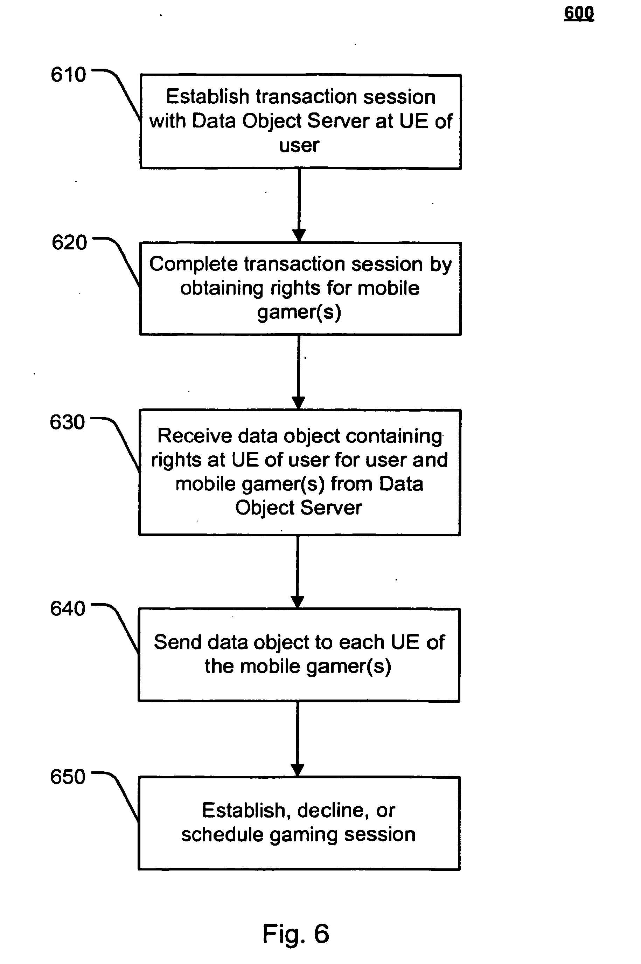

Fig. 6 depicts an exemplary flowchart diagram for initiating a multiplayer game, according to an embodiment of the disclosure. In step 610, a user operating UE 100 may establish a transaction session with a game source to play a multiplayer game with other participants. In step 620, the transaction session may be complete when rights for all the predetermined number of participants are obtained. In step 630, the user may receive at his or her UE a data object containing rights for the number of predetermined participants from the data object server 130. In step 640, the user may then send a data object from his or her UE to the UEs of each of the invitees. In step 650, the gaming session may be established, declined, or scheduled for playing at a later time.

Referring to the previous example, in step 610, User A may establish a transaction session with the game source. User A may pay a certain price to the game source to play Game X with two other participants. In this example, the two other participants may not yet be identified. In this exchange or transaction, the game source may provide the rights to play Game X for three total participants, as depicted in step 620. Alternately, if the initiator (User A) or one or more of the invitees has existing rights to play the Game X (*e.g.*, User A previously purchased perpetual rights), then the game source provides rights only for other participants who do not have existing rights.

In step 630, unlike 530, User A may receive, at his or her UE, a data object containing rights for three unidentified participants. Once this rights data object is received by User A, he or she may then decide which participants to invite. For example, User A may select persons from his buddy list or contact list stored in his or her UE. Alternatively, User A may select participants based on an indication of the on-line presence of these participants, as indicated in his or her UE. As depicted in step 640, User A may then directly send the data objects containing or linking to the necessary rights to the UEs of the invitees, e.g., User B and User C. In another embodiment, if the data object received by User A contains not the actual rights themselves but only an indicator of their existence, User A may direct the entity holding the actual rights (*e.g*., game server) to send the actual rights (or an indication of their existence) to the invitees selected by User A.

In step 650, the invitees, *e.g*., User B and User C, may accept, decline, or postpone the offer to participate in the gaming session initiated by User A. If the offer to participate in the gaming session is accepted by the invitees, the gaming session may be established directly between User A and the invitees that accepted or as a plurality of sessions through a central gaming server. It may be that prior to this point, the actual rights are held by the granting entity and an indicator of their existence is provided to invitees. Then, at this point, the actual rights may be provided to those who accept the invitation. In the event the offer to participate in the gaming session is declined by one or more of the invitees, the one or more invitees will not enter the gaming session. Communication may also be terminated immediately. In the event the offer to participate in the gaming session is postponed, the participants may schedule a future time to play the game. In one embodiment, the data object may contain sufficient information (*e.g*., session initiation link to a gaming server, etc.) for the participants to start the gaming session or initiate scheduling of a gaming session at a later time as well. Other various embodiments may also be provided.

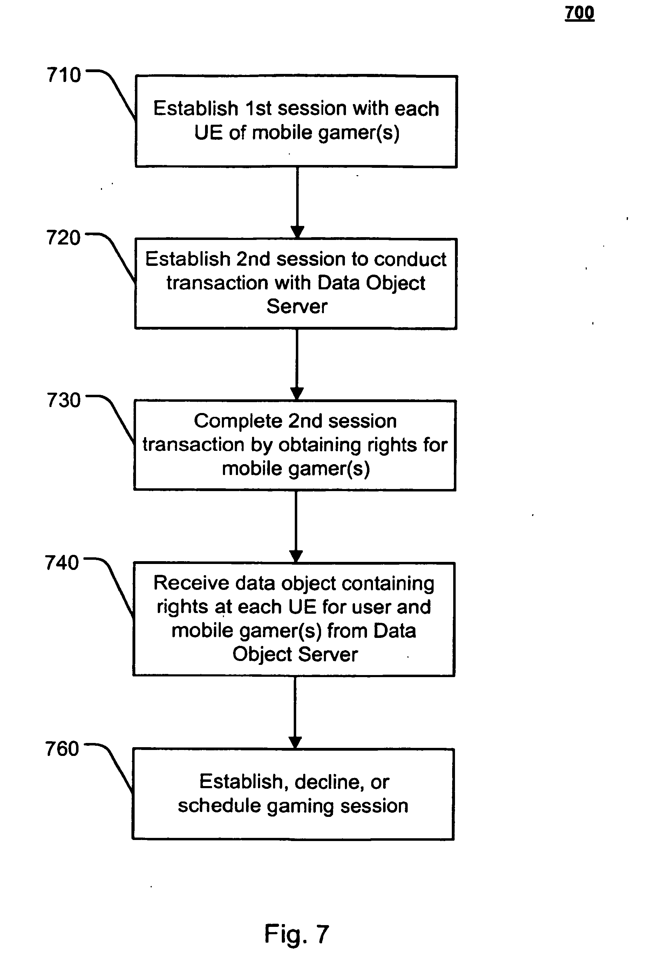

Fig. 7 depicts an exemplary flowchart diagram for initiating a multiplayer game, according to an embodiment of the disclosure. In step 710, a user operating UE 100 may establish a first session at a first communication channel with other parties, *e.g*., participants or invitees. In step 720, the user operating UE 100 may then establish a second session at a second communication channel with a game source to play a multiplayer game with other participants or invitees. In step 730, the second session may be complete (or transacted) when rights for all the predetermined number of participants are obtained. In step 740, the user and each predetermined invitee may receive a data object containing rights (or a data object containing a reference, *e.g*., hyperlink, to obtain the rights) to play the multiplayer game at their respective UE from the data object server 130. In step 760, the gaming session may be established, declined, or scheduled for playing at a later time.

Referring to the previous example, in step 710, the first session at a first communication channel between User A and other invitees may include a multi-party voice call (*e.g*., circuit, VoIP, PTT, etc.), instant messaging (IM), or other various forms of communication.

In step 720, User A may establish a second session at a second communication channel with the game source and pay a certain price, for example, to play Game X with User B and User C even though they are also parties in the first session. In this exchange or transaction, the game source may provide the rights to play Game X for three participants - User A, User B, and User C, as depicted in step 730.

In step 740, User A, User B, and User C may each receive, at their respective UEs, a data object containing rights and their identities directly from the data object server 130 to play Game X.

In step 760, the invitees, *e.g*., User B and User C, may accept, decline, or postpone the offer to participate in the gaming session initiated by User A. In one embodiment, accepting the offer to participate in the gaming session may be automatic since User A, User B, and User C are already engaged in the first session. In the event the offer to participate in the gaming session is accepted by the invitees (by default or choice), the gaming session may be established directly between User A and the invitees that accepted or established as a plurality of sessions through a central gaming server. In the event the offer to participate in the gaming session is declined by any of the invitees, he or she will not enter the gaming session. Communication may also be terminated immediately. If the offer to participate in the gaming session is postponed, the participants may schedule a future time to play the game. In one embodiment, the data object may contain sufficient information (*e.g*., session initiation link to a gaming server, etc.) for the participants to start the gaming session or initiate scheduling of a gaming session at a later time. Other various embodiments may also be provided.

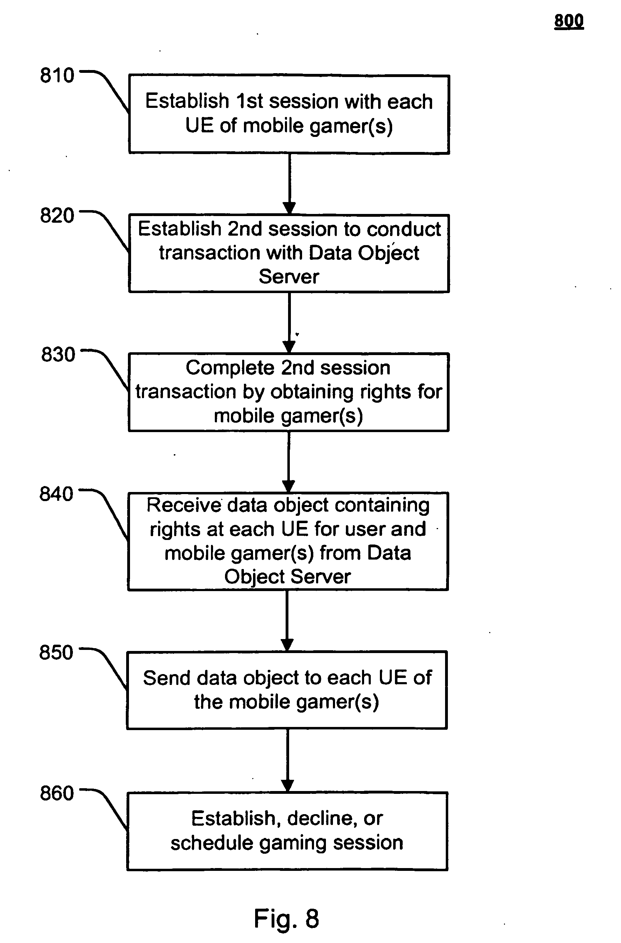

Fig. 8 depicts an exemplary flowchart diagram for initiating a multiplayer game, according to an embodiment of the disclosure. In step 810, a user operating UE 100 may establish a first session at a first communication channel with other parties, *e.g*., participants or invitees. In step 820, the user operating UE 100 may then establish a second session at a second communication channel with a game source to play a multiplayer game with other participants or invitees. In step 830, the second session may be complete (or transacted) when rights for all the predetermined number of participants are obtained. In step 630, the user may receive at his or her UE a data object containing rights (or a data object containing a reference, *e.g*., hyperlink, for obtaining the rights) for the number of predetermined participants from the data object server 130. In step 850, the user may then send a data object from his or her UE to the UEs of each of the participants. In step 860, the gaming session may be established, declined, or scheduled for playing at a later time.

Referring to the previous example, in step 810, the first session at a first communication channel between User A and other invitees may include a multi-party voice call (*e.g*., circuit, VoIP, PTT, etc.), instant messaging (IM), or other various forms of communication.

In step 820, User A may establish a second session at a second communication channel with the game source and pay a certain price, for example, to play Game X with User B and User C even though they are also parties in the first session. In this exchange or transaction, the game source may provide the rights to play Game X for three participants - User A, User B, and User C, as depicted in step 830.

In step 840, unlike 740, User A may receive, at his or her UE, a data object containing rights for three unidentified participants. Once these rights data objects are received by User A, he or she may then decide which invitees to invite. As depicted in step 850, User A may then directly send the rights data objects, including rights to play Game X, from his or her UE to the invitees, *e.g*., User B and User C. It should be appreciated, however, that User A may use the rights data objects to invite invitees not currently participating in the first session.

In step 860, the invitees, *e.g*., User B and User C, may accept, decline, or postpone the offer to participate in the gaming session initiated by User A. In one embodiment, accepting the offer to participate in the gaming session may be automatic since User A, User B, and User C are already engaged in the first session. If the offer to participate in the gaming session is accepted by the invitees (by default or choice), the gaming session may be established directly between User A and the invitees that accepted or established as a plurality of sessions through a central gaming server. If the offer to participate in the gaming session is declined by any of the invitees, he or she will not enter the gaming session. Communication may also be terminated immediately. If the offer to participate in the gaming session is postponed, the participants may schedule a future time to play the game. In one embodiment, the data object may contain sufficient information (*e.g*., session initiation link to a gaming server, etc.) for the participants to start the gaming session or initiate scheduling of a gaming session at a later time. Other various embodiments may also be provided.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. A method for initiating a multiplayer gaming session, comprising:
establishing a transaction with a data object server (130), using a first user's communication device (100);
completing the transaction at the first user's communication device (100) by receiving one or more data objects at the first user's communication device (100) for initiating a multiplayer gaming session between the first user's communication device (100) and one or more additional communication devices A, wherein the one or more data objects comprise rights to participate in the multiplayer gaming session, or one or more references to rights to participate in the multiplayer gaming session, for each of the first user's communication device (100) and the one or more additional communication devices A.

2. The method of claim 1, further comprising sending at least one of the one or more data objects from the first user's communication device (100) to at least one of the one or more additional communication devices (A).

3. The method of claim 1, further comprising establishing a multiplayer gaming session between the first user's communication device (100) and the one or more additional communication devices (A).

4. The method of claim 3, wherein the gaming session is established directly between the communication devices (100, 422, 424, 432, 434, 436, 438).

5. The method of claim 3, wherein the gaming session is established as a plurality of sessions through a gaming server.

6. The method of claim 1, wherein the one or more data objects comprise rights to participate in the multiplayer gaming session, for each of the first user's communication device (100) and the one or more additional communication devices A.

7. The method of claim 1, wherein the one or more data objects comprise one or more references for indirectly obtaining rights to participate in the multiplayer gaming session, for each of the first user's communication device (100) and the one or more additional communication devices A.

8. A device (100) for initiating a multiplayer gaming session, the device comprising computer software stored on a computer-readable media executable to perform the method of claim 1.

9. A method for initiating a multiplayer gaming session, comprising:
establishing a first communication session at a first user's communication device (100) between the first user's communication device (100) and one or more additional communication devices;
establishing a second transaction session with a data object server (130), using the first user's communication device (100);
completing the second transaction session at the first user's communication device (100) by receiving one or more data objects at the first user's communication device (100) for initiating a multiplayer gaming session between the first user's communication device (100) and one or more additional communication devices A, wherein the one or more data objects comprise rights to participate in the multiplayer gaming session, or one or more references to rights to participate in the multiplayer gaming session, for each of the first user's communication device (100) and the one or more additional communication devices A.

10. The method of claim 9, further comprising sending at least one of the one or more data objects from the first user's communication device (100) to at least one of the one or more additional communication devices A.

11. The method of claim 9, further comprising establishing a multiplayer gaming session between the first user's communication device (100) and the one or more additional communication devices A.

12. A device (100) for initiating a multiplayer gaming session, the device comprising computer software stored on a computer-readable media executable to perform the method of claim 11.

13. A method for initiating a multiplayer gaming session, comprising:
establishing a transaction at a data object server (130) with a first user's communication device (100);
completing the transaction at the data object server (130) by transmitting one or more data objects from the data object server (130) to the first user's communication device (100) for initiating a gaming session between the first user's communication device (100) and one or more additional communication devices A, wherein the one or more data objects comprise rights to participate in the gaming session, or one or more references to rights to participate in the gaming session, for each of the first user's communication device (100) and the one or more additional communication devices A.

14. The method of claim 13, further comprising transmitting the one or more data objects to the one or more additional communication devices A as specified by the transaction with the first user's communication device (100).

15. A device (100) for initiating a gaming session, the device comprising computer software stored on a computer-readable media executable to perform the method of claim 13.

## Patentansprüche

1. Verfahren zum Einleiten einer Mehrspielerspielsitzung, umfassend:
Einrichten einer Transaktion mit einem Datenobjektserver (130) unter Verwendung einer Kommunikationsvorrichtung (100) eines ersten Benutzers;
Fertigstellen der Transaktion an der Kommunikationsvorrichtung (100) des ersten Benutzers durch Empfangen eines oder mehrerer Datenobjekte an der Kommunikationsvorrichtung (100) des ersten Benutzers zum Einleiten einer Mehrspielerspielsitzung zwischen der Kommunikationsvorrichtung (100) des ersten Benutzers und einer oder mehreren zusätzlichen Kommunikationsvorrichtungen A, wobei das eine oder die mehreren Datenobjekte Rechte, um an der Mehrspielerspielsitzung teilzunehmen, oder eine oder mehrere Referenzen zu Rechten, um an der Mehrspielerspielsitzung teilzunehmen, für die Kommunikationsvorrichtung (100) des ersten Benutzers und jede der einen oder mehreren zusätzlichen Kommunikationsvorrichtungen A umfassen.

2. Verfahren nach Anspruch 1, ferner umfassend ein Senden von mindestens einem der einen oder mehreren Datenobjekte von der Kommunikationsvorrichtung (100) des ersten Benutzers zu mindestens einer der einen oder mehreren zusätzlichen Kommunikationsvorrichtungen (A).

3. Verfahren nach Anspruch 1, ferner umfassend ein Einrichten einer Mehrspielerspielsitzung zwischen der Kommunikationsvorrichtung (100) des ersten Benutzers und der einen oder den mehreren zusätzlichen Kommunikationsvorrichtungen (A).

4. Verfahren nach Anspruch 3, wobei die Spielsitzung direkt zwischen den Kommunikationsvorrichtungen (100, 422, 424, 432, 434, 436, 438) eingerichtet wird.

5. Verfahren nach Anspruch 3, wobei die Spielsitzung als mehrere Sitzungen über einen Spielserver eingerichtet wird.

6. Verfahren nach Anspruch 1, wobei das eine oder die mehreren Datenobjekte Rechte, um an der Mehrspielerspielsitzung teilzunehmen, für die Kommunikationsvorrichtung (100) des ersten Benutzers und jede der einen oder mehreren zusätzlichen Kommunikationsvorrichtungen umfassen.

7. Verfahren nach Anspruch 1, wobei das eine oder die mehreren Datenobjekte eine oder mehrere Referenzen für ein indirektes Erlangen von Rechten, um an der Mehrspielerspielsitzung teilzunehmen, für die Kommunikationsvorrichtung (100) des ersten Benutzers und jede der einen oder mehreren zusätzlichen Kommunikationsvorrichtungen A umfassen.

8. Vorrichtung (100) zum Einleiten einer Mehrspielerspielsitzung, wobei die Vorrichtung Computersoftware umfasst, welche auf einem Computer lesbaren Medium gespeichert ist und ausführbar ist, das Verfahren nach Anspruch 1 auszuführen.

9. Verfahren zum Einleiten einer Mehrspielerspielsitzung, umfassend:
Einrichten einer ersten Kommunikationssitzung bei einer ersten Kommunikationsvorrichtung (100) eines ersten Benutzers zwischen der Kommunikationsvorrichtung (100) des ersten Benutzers und einer oder mehreren zusätzlichen Kommunikationsvorrichtungen;
Einrichten einer zweiten Transaktionssitzung mit einem Datenobjektserver (130) unter Verwendung der Kommunikationsvorrichtung (100) des ersten Benutzers;
Fertigstellen der zweiten Transaktionssitzung an der Kommunikationsvorrichtung (100) des ersten Benutzers durch Empfangen von einem oder mehreren Datenobjekten an der Kommunikationsvorrichtung (100) des ersten Benutzers zum Einleiten einer Mehrspielerspielsitzung zwischen der Kommunikationsvorrichtung (100) des ersten Benutzers und einer oder mehreren zusätzlichen Kommunikationsvorrichtungen A, wobei das eine oder die mehreren Datenobjekte Rechte, um an der Mehrspielerspielsitzung teilzunehmen, oder eine oder mehrere Referenzen zu Rechten, um an der Mehrspielerspielsitzung teilzunehmen, für die Kommunikationsvorrichtung (100) des ersten Benutzers und jede der einen oder mehreren zusätzlichen Kommunikationsvorrichtungen A umfassen.

10. Verfahren nach Anspruch 9, ferner umfassend ein Senden von mindestens einem der einen oder mehreren Datenobjekte von der Kommunikationsvorrichtung (100) des ersten Benutzers zu mindestens einer von der einen oder den mehreren zusätzlichen Kommunikationsvorrichtungen A.

11. Verfahren nach Anspruch 9, ferner umfassend ein Einrichten einer Mehrspielerspielsitzung zwischen der Kommunikationsvorrichtung (100) des ersten Benutzers und der einen oder den mehreren zusätzlichen Kommunikationsvorrichtungen A.

12. Vorrichtung (100) zum Einleiten einer Mehrspielerspielsitzung, wobei die Vorrichtung eine Computersoftware umfasst, welche auf einem Computer lesbaren Medium gespeichert ist und ausführbar ist, um das Verfahren nach Anspruch 11 auszuführen.

13. Verfahren zum Einleiten einer Mehrspielerspielsitzung, umfassend:
Einrichten einer Transaktion bei einem Datenobjektserver (130) mit einer Kommunikationsvorrichtung (100) eines ersten Benutzers;
Fertigstellen der Transaktion an dem Datenobjektserver (130) durch Übertragen von einem oder mehreren Datenobjekten von dem Datenobjektserver (130) zu der Kommunikationsvorrichtung (100) des ersten Benutzers zum Einleiten einer Spielsitzung zwischen der Kommunikationsvorrichtung (100) des ersten Benutzers und einer oder mehreren zusätzlichen Kommunikationsvorrichtungen A, wobei das eine oder die mehreren Datenobjekte Rechte, um an der Spielsitzung teilzunehmen, oder eine oder mehrere Referenzen zu Rechten, um an der Spielsitzung teilzunehmen, für die Kommunikationsvorrichtung (100) des ersten Benutzers und jede der einen oder mehreren zusätzlichen Kommunikationsvorrichtungen A umfassen.

14. Verfahren nach Anspruch 13, ferner umfassend ein Übertragen des einen oder der mehreren Datenobjekte zu einer oder mehreren zusätzlichen Kommunikationsvorrichtungen A wie es durch die Transaktion mit der Kommunikationsvorrichtung (100) des ersten Benutzers spezifiziert ist.

15. Vorrichtung (100) zum Einleiten einer Spielsitzung, wobei die Vorrichtung eine Computersoftware umfasst, welche auf einem Computer lesbaren Medium gespeichert ist und ausführbar ist, das Verfahren nach Anspruch 13 auszuführen.

## Revendications

1. Procédé de lancement d'une session de jeu à joueurs multiples, comprenant les étapes consistant à :
établir une transaction avec un serveur d'objets de données (130), à l'aide d'un dispositif de communication d'un premier utilisateur (100) ;
achever la transaction sur le dispositif de communication du premier utilisateur (100) en recevant un ou plusieurs objets de données sur le dispositif de communication du premier utilisateur (100) afin de lancer une session de jeu à joueurs multiples entre le dispositif de communication du premier utilisateur (100) et un ou plusieurs dispositifs de communication supplémentaires (A), lesdits un ou plusieurs objets de données comprenant les droits de participer à la session de jeu à joueurs multiples ou une ou plusieurs références aux droits de participer à la session de jeu à joueurs multiples, pour chacun des dispositifs, parmi le dispositif de communication du premier utilisateur (100) et lesdits un ou plusieurs dispositifs de communication supplémentaires (A).

2. Procédé selon la revendication 1, comprenant en outre l'étape consistant à envoyer au moins un objet, parmi lesdits un ou plusieurs objets de données, entre le dispositif de communication du premier utilisateur (100) et au moins un dispositif parmi lesdits un ou plusieurs dispositifs de communication supplémentaires (A).

3. Procédé selon la revendication 1, comprenant en outre l'étape consistant à établir une session de jeu à joueurs multiples entre le dispositif de communication du premier utilisateur (100) et lesdits un ou plusieurs dispositifs de communication supplémentaires (A).

4. Procédé selon la revendication 3, dans lequel la session de jeu est établie directement entre les dispositifs de communication (100, 422, 424, 432, 434, 436, 438).

5. Procédé selon la revendication 3, dans lequel la session de jeu est établie sous la forme d'une pluralité de sessions via un serveur de jeu.

6. Procédé selon la revendication 1, dans lequel lesdits un ou plusieurs objets de données comprennent des droits de participer à la session de jeu à joueurs multiples, pour chacun des dispositifs parmi le dispositif de communication du premier utilisateur (100) et lesdits un ou plusieurs dispositifs de communication supplémentaires (A).

7. Procédé selon la revendication 1, dans lequel lesdits un ou plusieurs objets de données comprennent une ou plusieurs références destinées à obtenir indirectement des droits de participer à la session de jeu à joueurs multiples, pour chacun des dispositifs parmi le dispositif de communication du premier utilisateur (100) et lesdits un ou plusieurs dispositifs de communication supplémentaires (A).

8. Dispositif (100) destiné à lancer une session de jeu à joueurs multiples, le dispositif comprenant un logiciel d'ordinateur stocké sur un support lisible par ordinateur qui peut être exécuté pour mettre en oeuvre le procédé selon la revendication 1.

9. Procédé de lancement d'une session de jeu à joueurs multiples, comprenant les étapes consistant à :
établir une première session de communication sur un dispositif de communication d'un premier utilisateur (100), entre le dispositif de communication du premier utilisateur (100) et un ou plusieurs dispositifs de communication supplémentaires ;
établir une seconde session de transaction avec un serveur d'objets de données (130), à l'aide du dispositif de communication du premier utilisateur (100) ;
achever la seconde session de transaction sur le dispositif de communication du premier utilisateur (100) en recevant un ou plusieurs objets de données sur le dispositif de communication du premier utilisateur (100) afin de lancer une session de jeu à joueurs multiples entre le dispositif de communication du premier utilisateur (100) et un ou plusieurs dispositifs de communication supplémentaires (A), lesdits un ou plusieurs objets de données comprenant des droits de participer à la session de jeu à joueurs multiples ou une ou plusieurs références à des droits de participer à la session de jeu à joueurs multiples, pour chacun des dispositifs, parmi le dispositif de communication du premier utilisateur (100) et lesdits un ou plusieurs dispositifs de communication supplémentaires (A).

10. Procédé selon la revendication 9, comprenant en outre l'étape consistant à envoyer au moins un objet, parmi lesdits un ou plusieurs objets de données, entre le dispositif de communication du premier utilisateur (100) et au moins un dispositif parmi lesdits un ou plusieurs dispositifs de communication supplémentaires (A).

11. Procédé selon la revendication 9, comprenant en outre l'étape consistant à établir une session de jeu à joueurs multiples entre le dispositif de communication du premier utilisateur (100) et lesdits un ou plusieurs dispositifs de communication supplémentaires (A).

12. Dispositif (100) destiné à lancer une session de jeu à joueurs multiples, le dispositif comprenant un logiciel d'ordinateur stocké sur un support lisible par ordinateur qui peut être exécuté pour mettre en oeuvre le procédé selon la revendication 11.

13. Procédé de lancement d'une session de jeu à joueurs multiples, comprenant les étapes consistant à :
établir une transaction sur un serveur d'objets de données (130) avec un dispositif de communication d'un premier utilisateur (100) ;
achever la transaction sur le serveur d'objets de données (130) en transmettant un ou plusieurs objets de données entre le serveur d'objets de données (130) et le dispositif de communication du premier utilisateur (100), afin de lancer une session de jeu entre le dispositif de communication du premier utilisateur (100) et un ou plusieurs dispositifs de communication supplémentaires (A), lesdits un ou plusieurs objets de données comprenant des droits de participer à la session de jeu à joueurs multiples ou une ou plusieurs références à des droits de participer à la session de jeu à joueurs multiples, pour chacun des dispositifs, parmi le dispositif de communication du premier utilisateur (100) et lesdits un ou plusieurs dispositifs de communication supplémentaires (A).

14. Procédé selon la revendication 13, comprenant en outre l'étape consistant à transmettre lesdits un ou plusieurs objets de données auxdits un ou plusieurs dispositifs de communication supplémentaires (A), selon les spécifications de la transaction avec le dispositif de communication du premier utilisateur (100).

15. Dispositif (100) destiné à lancer une session de jeu à joueurs multiples, le dispositif comprenant un logiciel d'ordinateur stocké sur un support lisible par ordinateur qui peut être exécuté pour mettre en oeuvre le procédé selon la revendication 13.
